# EUROPEAN PATENT APPLICATION

(11) **EP 4 827 081 A1**
(43) Date of publication of application: **21.10.2026**
(21) Application number: 24924120.9
(22) Date of filing: 20.12.2024
(51) Int. Cl.: H04N 9/31, G03B 21/26, H04N 23/88, H04N 23/71, H04N 23/62

(54) **IMAGE PROJECTOR, AND METHOD FOR CONTROLLING SAME**

(30) Priority: 08.02.2024 KR 20240019979
(71) Applicant: Samsung Electronics Co., Ltd., Suwon-si, Gyeonggi-do 16677 (KR)
(72) Inventor: YOON, Kangsik, Suwon-si, Gyeonggi-do 16677 (KR); PARK, Jaesung, Suwon-si, Gyeonggi-do 16677 (KR); HEO, Dowon, Suwon-si, Gyeonggi-do 16677 (KR)
(74) Representative: Appleyard Lees IP LLP
(86) International application number: PCT/KR2024/020882
(87) International publication number: WO 2025/170179

(57) **Abstract**

Disclosed herein is an image projector apparatus and a method for controlling the same. The image projector apparatus includes: a projector configured to form a white pattern and output the white pattern to a projection surface; and a processor configured to: generate a map representing chromaticity and luminance based on red, green, blue (RGB) values of each pixel of an image captured from the projection surface, detect a position of ambient light based on the map, generate a plurality of color patches based on the position of the ambient light, each of the plurality of color patches including a plurality of colors, dispose the plurality of color patches on the projection surface, correct chromaticity and luminance of remaining color patches based on chromaticity and luminance of a color patch selected through a user interface, and correct chromaticity and luminance of an RGB output image based on the corrected values.

## Description

### [Technical Field]

The disclosure relates to an image projector apparatus and a method for controlling the same.

### [Background Art]

An image projector apparatus may project an image in a user-designated direction and onto a user-designated location. The image projector apparatus may project image data stored in a memory or an image signal input to an image input terminal onto a screen, a wall surface, or the like.

For example, the color of an image projected by the image projector apparatus may be affected by the brightness of an external light source (also referred to as ambient light). Such a projection environment may reduce image quality.

Because a portable image projector apparatus may be more susceptible to such environmental conditions, improvement of image quality considering ambient light conditions is required.

However, in existing technologies, users without expert knowledge may have difficulty operating the image projector apparatus to achieve highly uniform image quality according to the ambient light conditions.

### [Disclosure]

### [Technical Problem]

The disclosure provides an image projector apparatus that may provide highly uniform image quality in consideration of ambient light conditions, and a method for controlling the same.

### [Technical Solution]

According to an aspect of the disclosure, an image projector apparatus may include: a projector configured to form a white pattern and output the white pattern to a projection surface; and a processor configured to: generate a map representing chromaticity and luminance based on red, green, blue (RGB) values of each pixel of an captured image of the projection surface, detect a position of ambient light based on the map, generate a plurality of color patches based on the position of the ambient light, each of the plurality of color patches including a plurality of colors, dispose the plurality of color patches on the projection surface, correct chromaticity and luminance of remaining color patches based on chromaticity and luminance of a color patch selected through a user interface, and correct chromaticity and luminance of an RGB output image based on the corrected values.

The image projector apparatus may further include a sensor configured to capture the projection surface and generate the image.

The processor may be configured to: calculate a relative value by dividing chromaticity and luminance of each pixel of the captured image by an average value of chromaticity and luminance of an entirety of the image; and generate the map based on the relative value.

The processor may be configured to recognize at least one of a color change or a brightness change of the image based on the map to detect the position of the ambient light.

The processor may be configured to generate the plurality of color patches based on at least one of brightness, contrast, or color temperature according to the position of the ambient light.

The processor may be configured to dispose one color patch at a center of the projection surface, and dispose two color patches on lateral sides of each of an upper region and a lower region of the projection surface.

The processor may be configured to generate the plurality of color patches, each of which has a plurality of color cells.

In response to a selection of a color patch having a color cell closest to white by a user through the user interface, the processor may be configured to correct chromaticity and luminance of remaining color patches based on chromaticity and luminance of the white color cell.

According to another aspect of the disclosure, a method for controlling an image projector apparatus may include: forming a white pattern and outputting the white pattern to a projection surface; generating a map representing chromaticity and luminance based on red, green, blue (RGB) values of each pixel of an image captured from the projection surface; detecting a position of ambient light based on the map; generating a plurality of color patches based on the position of the ambient light and disposing the plurality of color patches on the projection surface, each of the plurality of color patches including a plurality of colors; correcting chromaticity and luminance of remaining color patches based on chromaticity and luminance of a color patch selected through a user interface; and correcting chromaticity and luminance of an RGB output image based on the corrected values.

The generating of the map may include calculating a relative value by dividing chromaticity and luminance of each pixel of the captured image by an average value of chromaticity and luminance of an entirety of the image, and generating the map based on the relative value.

The detecting of the position of the ambient light may include recognizing at least one of a color change or a brightness change of the image based on the map, and detecting the position of the ambient light based on the recognized result.

The plurality of color patches may be generated based on at least one of brightness, contrast, or color temperature according to the position of the ambient light.

The generating of the plurality of color patches and disposing of the plurality of color patches on the projection surface may include: disposing one color patch at a center of the projection surface, and disposing two color patches on lateral sides of each of an upper region and a lower region of the projection surface.

Each of the plurality of color patches may be generated to have a plurality of color cells.

In response to a selection of a color patch having a color cell closest to white by a user through the user interface, chromaticity and luminance of remaining color patches may be corrected based on chromaticity and luminance of the white color cell.

According to still another aspect of the disclosure, a computer-readable recording medium may store one or more programs including instructions for performing the method for controlling the image projector apparatus.

### [Advantageous Effects]

According to the disclosure, an image projector apparatus and a method for controlling the same may provide a highly uniform image quality in consideration of ambient light conditions.

A user may easily select a color patch through a user interface, and chromaticity and luminance of a red, green, blue (RGB) output image may be corrected based on corrected values of the color patch, thereby providing a highly uniform image quality.

The effects that may be achieved by the disclosure are not limited to the above-mentioned effects, and other effects not mentioned will be clearly understood by one of ordinary skill in the technical art to which the disclosure belongs from the following description.

### [Description of Drawings]

FIG. 1 is a block diagram illustrating components of an image projector apparatus according to an embodiment.
FIG. 2 illustrates color patches disposed on a projection surface according to an embodiment.
FIG. 3 is a flowchart illustrating a method for controlling an image projector apparatus according to an embodiment.

### [Modes of the Invention]

Various embodiments and the terms used therein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

The terms such as "~portion", "~member", "~module", and the like may be implemented in hardware or software. According to embodiments, a plurality of "~portions", "~members", or "~modules" may be embodied as a single element, or a single "~portion", "~member", or "~module" may include a plurality of elements.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

Hereinafter, a display according to various embodiments will be described in detail with reference to accompanying drawings.

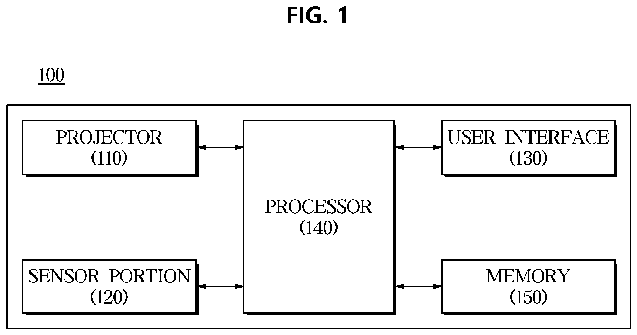

FIG. 1 is a block diagram illustrating components of an image projector apparatus according to an embodiment.

Referring to FIG. 1, an image projector apparatus 100 may include a projector 110, a sensor 120, a user interface 130, a processor 140, and a memory 150. Although not shown, the image projector apparatus 100 may further include various known components, such as a component for receiving audio and image signals from an external device, a power supplier, a projector apparatus driver, and the like. The image projector apparatus 100 may include, for example, a digital light processing (DLP) projector apparatus, a liquid crystal display (LCD) projector apparatus, or the like.

The projector 110 may form a white pattern and output the white pattern to a projection surface (screen). That is, the projector 110 may form the white pattern using red, green, blue (RGB) white signals (255, 255, 255), and may project the white pattern uniformly onto the projection surface.

The projector 110 may include a lamp that generates white light, and a digital micromirror device (DMD) or a display panel that forms a white pattern or a color image using the light emitted from the lamp. The digital micromirror device may be used in a DLP projector apparatus, and the display panel may be used in an LCD projector apparatus.

The sensor 120 may capture the projection surface and generate an image. The sensor 120 may include, for example, a camera of the image projector apparatus 100.

The sensor 120 may obtain information regarding chromaticity and luminance by analyzing RGB values of each pixel of the image. The sensor 120 may be included in the processor 140 to be described below.

The sensor 120 may use charge-coupled device (CCD) or complementary metal-oxide-semiconductor (CMOS) technology. In another example, the projection surface may be captured using another camera connected to the image projector apparatus 100.

In addition, the sensor 120 may include at least one of an optical sensor that detects brightness and intensity of surrounding ambient light (external light source), a color sensor that detects a color of ambient light, or an image sensor that detects chromaticity and luminance of the captured image.

The user interface 130 may be provided in various forms, such as a button or a selection screen. For example, when a plurality of color patches to be described below are disposed on the projection surface, the user interface 130 may allow the user to select a desired color patch from the plurality of color patches.

In addition, for example, the user interface 130 may turn the image projector apparatus 100 on or off, select a projection source from among various input sources (e.g., a computer, a laptop, a digital video disc (DVD) player, etc.), or perform various setting changes.

The processor 140 may control overall operations and functions of the image projector apparatus 100, and the functions of the image projector apparatus 100 may be processed by a single processor 140 or by a combination of a plurality of processors 140.

The processor 140 may be implemented as a digital signal processor (DSP) or a microprocessor. However, the processor 140 is not limited thereto, and may include at least one of a central processing unit (CPU), a microcontroller unit (MCU), a microprocessing unit (MPU), a controller, an application processor (AP), a communication processor (CP), and an ARM processor, or may be defined by the corresponding terms. In addition, the processor 140 may be implemented in the form of a system on chip (SoC), a large scale integration (LSI), or a field programmable gate array (FPGA) in which a processing algorithm is embedded.

The processor 140 may include a logic circuit and an arithmetic circuit as hardware. The processor 140 may control electrically connected components of the image projector apparatus 100 using programs, instructions, and data stored in the memory 150 to operate of the image projector apparatus 100. The processor 140 and the memory 150 may be implemented as separate chips or as a single chip.

The processor 140 may generate a map representing chromaticity and luminance based on the RGB values of each pixel of the image captured by the sensor 120 described above.

The map may represent the color of each pixel of the image as coordinates in a specific color space, and thus the chromaticity of each pixel may be quantitatively identified. In addition, the map may provide luminance information for each pixel of the image.

The processor 140 may obtain information regarding chromaticity and luminance by analyzing the RGB values of each pixel of the image captured by the sensor 120, and may generate the map based on the information.

Here, the processor 140 may calculate a relative value by dividing the chromaticity and luminance of each pixel of the image captured from the projection surface by an average value of the chromaticity and luminance of the entire image, and generate the map based on the calculated relative value.

The processor 140 may detect the position of the ambient light based on the map. A portion close to the position of the ambient light within the image may have relatively high chromaticity and luminance.

The processor 140 may detect the position of the ambient light by recognizing at least one of a color change or a brightness change in the image based on the map. By detecting the position of the ambient light, a direction of the ambient light may be determined. That is, a direction from which the ambient light is emitted may be identified.

In addition, based on the above-described position of the ambient light, the processor 140 may generate a plurality of color patches, each of which includes a plurality of colors. The processor 140 may dispose the plurality of color patches on the projection surface.

Here, the processor 140 may generate the plurality of color patches based on at least one of brightness, contrast, or color temperature according to the position of the ambient light.

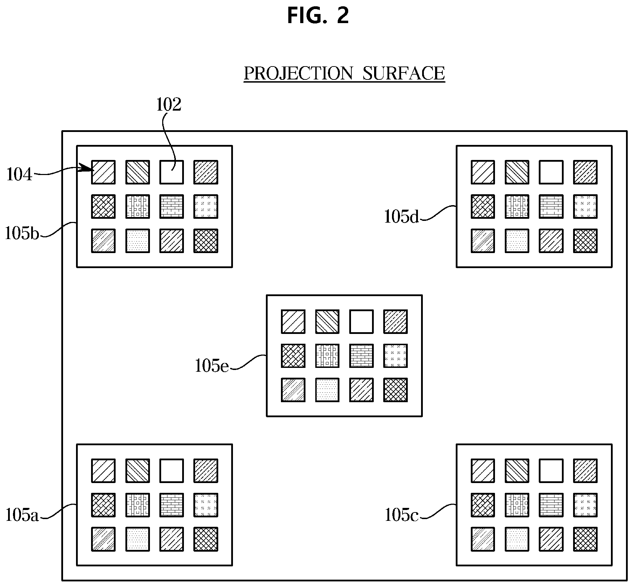

FIG. 2 illustrates color patches disposed on a projection surface according to an embodiment.

Referring to FIG. 2, the processor 140 may generate a plurality of color patches 105a, 105b, 105c, 105d, and 105e (105a to 105e), each of which includes a plurality of color cells 104. For example, the processor 140 may generate the plurality of color patches 105a to 105e each having twelve color cells 104.

Each of the color patches 105a to 105e may include the same number of color cells 104 arranged in the same number of rows and columns.

The color assigned to each color cell 104 may be selected in consideration of the ambient light conditions, such as the color temperature of the ambient light.

Each color cell 104 may have colors of different tones, and the arrangement order of the color cells 104 may be the same for each color patch 105a to 105e.

Each color cell 104 may have various colors such as, for example, white, red, and green such that the influence of the ambient light on different hues may be estimated. For example, each color cell 104 may be formed in a square shape and disposed at preset intervals.

For example, the processor 140 may dispose five color patches 105a to 105e on the projection surface. Specifically, the processor 140 may dispose one color patch 105e at the center of the projection surface, and dispose four color patches 105a to 105d on the lateral sides of the upper and lower regions of the projection surface.

Because the color patch 105e disposed in the center region of the projection surface is located at the center region of the projection surface, the color patch 105e may be used for correction to maintain a balance between dark regions and bright regions of the image.

The color patches 105a to 105d disposed on the lateral sides of the upper and lower regions of the projection surface may be used to correct color distortion occurring on the lateral sides of the projection surface.

As such, the color patch 105e disposed at the center region of the projection surface and the color patches 105a to 105d disposed in both upper and lower regions are exposed to different ambient light conditions. Accordingly, the color patches may be effectively utilized to perform correction to have a highly uniform image quality in various regions of the projection surface.

For example, in a case where ambient light is positioned at a lower right portion of the projection surface, each of the color patches 105a to 105e may have different chromaticity and luminance. High image quality may be obtained only when the five color patches 105a to 105e have uniform chromaticity and luminance.

Accordingly, the processor 140 may correct the chromaticity and luminance of the remaining color patches based on the chromaticity and luminance of the color patch selected through the user interface 130, and may correct the chromaticity and luminance of an RGB output image based on the corrected values of the color patches.

When correcting the RGB output image, the processor 140 may perform correction according to the optical characteristics of the image projector apparatus 100. For example, the processor 140 may correct the RGB output image in consideration of a distortion coefficient, a focal length, and the like of a lens of the image projector apparatus 100, thereby providing an optimal visual effect to the user.

When a color patch having a color cell closest to white is selected by the user through the user interface 130, the processor 140 may correct the chromaticity and luminance of the remaining color patches based on the chromaticity and luminance of the white color cell of the corresponding color patch.

For example, in a case where the user selects the color patch 105b disposed in the upper left region as the color patch including the color cell closest to white through the user interface 130, the correction for the chromaticity and luminance of the remaining color patches may be performed based on the chromaticity and luminance of the white color cell 102 of the corresponding color patch 105b.

The user may repeatedly select a color patch having a cell closest to white according to a user judgment through the user interface 130, and the correction of the remaining color patches may be performed according to the white tone of the corresponding color patch.

In another example, the processor 140 may automatically select a color patch disposed closest to the position of the ambient light on the projection surface, and may correct the chromaticity and luminance of the remaining color patches based on the chromaticity and luminance of the white color cell of the corresponding color patch.

The memory 150 may store programs, applications, and data for operation of the image projector apparatus 100, and may store data generated by the processor 140.

The memory 150 may store images captured by the sensor 120, information detected by the sensor 120, information related to the position and direction of the ambient light, map information, RGB values of each pixel of the image, chromaticity and luminance information of the image, information related to color patches, information regarding color coordinate correction, and the like.

The memory 150 may include a non-volatile memory such as a read-only memory (ROM) and a flash memory for long-term data storage. The memory may include a volatile memory such as a static random access memory (S-RAM) and a dynamic random access memory (D-RAM) for temporarily storing data.

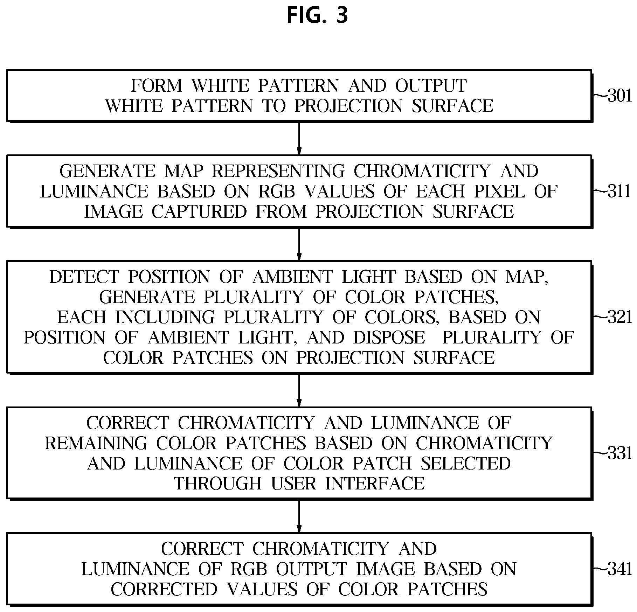

FIG. 3 is a flowchart illustrating a control method of an image projector apparatus according to an embodiment.

Referring to FIG. 3, the projector 110 forms a white pattern and outputs the white pattern onto a projection surface (301).

Here, the projector 110 may form the white pattern using RGB white signals (255, 255, 255) and may project the white pattern uniformly onto the projection surface.

The processor 140 generates a map representing chromaticity and luminance based on RGB values of each pixel of an image captured from the projection surface (311).

Here, a relative value may be calculated by dividing the chromaticity and luminance of each pixel of the captured image by an average value of the chromaticity and luminance of the entire image, and the map may be generated based on the relative value.

The processor 140 detects a position of the ambient light based on the map, and generates a plurality of color patches, each including a plurality of colors, based on the position of the ambient light, and disposes the plurality of color patches on the projection surface (321).

Here, detecting the position of the ambient light includes recognizing at least one of a color change or a brightness change of the image based on the map, and the position of the ambient light may be detected based on the recognized result.

Further, the plurality of color patches may be generated based on at least one of brightness, contrast, or color temperature according to the position of the ambient light.

Each of the plurality of color patches may be generated to have a plurality of color cells.

In addition, generating the plurality of color patches and disposing the plurality of color patches on the projection surface may include disposing one color patch at the center region of the projection surface and disposing four color patches on the lateral sides of the upper and lower regions of the projection surface.

The processor 140 corrects the chromaticity and luminance of the remaining color patches based on the chromaticity and luminance of the color patch selected through the user interface 130 (331).

Here, when a color patch having a color cell closest to white is selected by a user through the user interface 130, the correction for the chromaticity and luminance of the remaining color patches may be performed based on the chromaticity and luminance of the white color cell.

The processor 140 corrects the chromaticity and luminance of an RGB output image based on the corrected values described above (341).

That is, the processor 140 may correct the chromaticity and luminance of the RGB output image based on the corrected values of the color patches. When correcting the RGB output image, the correction may be performed according to the optical characteristics of the image projector apparatus 100. For example, the processor 140 may correct the RGB output image in consideration of a distortion coefficient, a focal length, and the like of a lens of the image projector apparatus 100, thereby providing an optimal visual effect to the user.

As such, through the above-described embodiment, the user may easily select a color patch through the user interface, and the chromaticity and luminance of the RGB output image may be corrected based on the corrected values of the color patch, thereby providing a highly uniform image quality.

The method according to the various embodiments disclosed herein may be provided in a computer program product. The computer program product may be traded between a seller and a buyer as a product. The computer program product may be distributed in the form of a machine-readable recording medium (e.g., compact disc read only memory (CD-ROM)), or may be distributed (e.g., download or upload) through an application store (e.g., Play Store^{TM}) online or directly between two user devices (e.g., smartphones). In the case of online distribution, at least a portion of the computer program product (e.g., downloadable app) may be stored at least semi-permanently or may be temporarily generated in a recording medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. An image projector apparatus, comprising:
a projector configured to form a white pattern and output the white pattern to a projection surface; and
a processor configured to:
generate a map representing chromaticity and luminance based on red, green, blue (RGB) values of each pixel of an image captured from the projection surface,
detect a position of ambient light based on the map,
generate a plurality of color patches based on the position of the ambient light, each of the plurality of color patches including a plurality of colors,
dispose the plurality of color patches on the projection surface,
correct chromaticity and luminance of remaining color patches based on chromaticity and luminance of a color patch selected through a user interface, and
correct chromaticity and luminance of an RGB output image based on the corrected values.

2. The image projector apparatus of claim 1, further comprising:
a sensor configured to capture the projection surface and generate the image.

3. The image projector apparatus of claim 1, wherein the processor is configured to:
calculate a relative value by dividing chromaticity and luminance of each pixel of the captured image by an average value of chromaticity and luminance of an entirety of the image; and
generate the map based on the relative value.

4. The image projector apparatus of claim 1, wherein the processor is configured to recognize at least one of a color change or a brightness change of the image based on the map to detect the position of the ambient light.

5. The image projector apparatus of claim 4, wherein the processor is configured to generate the plurality of color patches based on at least one of brightness, contrast, or color temperature according to the position of the ambient light.

6. The image projector apparatus of claim 5, wherein the processor is configured to dispose one color patch at a center of the projection surface, and dispose two color patches on lateral sides of each of an upper region and a lower region of the projection surface.

7. The image projector apparatus of claim 5, wherein the processor is configured to generate the plurality of color patches, each of which has a plurality of color cells.

8. The image projector apparatus of claim 7, wherein, in response to a selection of a color patch having a color cell closest to white by a user through the user interface, the processor is configured to correct chromaticity and luminance of remaining color patches based on chromaticity and luminance of the white color cell.

9. A method for controlling an image projector apparatus, the method comprising:
forming a white pattern and outputting the white pattern to a projection surface;
generating a map representing chromaticity and luminance based on red, green, blue (RGB) values of each pixel of an image captured from the projection surface;
detecting a position of ambient light based on the map;
generating a plurality of color patches based on the position of the ambient light and disposing the plurality of color patches on the projection surface, each of the plurality of color patches including a plurality of colors;
correcting chromaticity and luminance of remaining color patches based on chromaticity and luminance of a color patch selected through a user interface; and
correcting chromaticity and luminance of an RGB output image based on the corrected values.

10. The method of claim 9, wherein the generating of the map comprises calculating a relative value by dividing chromaticity and luminance of each pixel of the captured image by an average value of chromaticity and luminance of an entirety of the image, and
generating the map based on the relative value.

11. The method of claim 9, wherein the detecting of the position of the ambient light comprises recognizing at least one of a color change or a brightness change of the image based on the map, and
detecting the position of the ambient light based on the recognized result.

12. The method of claim 11, wherein the plurality of color patches are generated based on at least one of brightness, contrast, or color temperature according to the position of the ambient light.

13. The method of claim 12, wherein the generating of the plurality of color patches and disposing of the plurality of color patches on the projection surface comprises:
disposing one color patch at a center of the projection surface, and disposing two color patches on lateral sides of each of an upper region and a lower region of the projection surface.

14. The method of claim 12, wherein each of the plurality of color patches is generated to have a plurality of color cells.

15. The method of claim 14, wherein, in response to a selection of a color patch having a color cell closest to white by a user through the user interface, chromaticity and luminance of remaining color patches are corrected based on chromaticity and luminance of the white color cell.
